# EUROPEAN PATENT APPLICATION

(11) **EP 0 980 702 A1**
(43) Date of publication of application: **23.02.2000**
(21) Application number: 99115048.3
(22) Date of filing: 04.08.1999
(51) Int. Cl.: B01D 53/68

(54) **A method of treating exhaust gas and an apparatus therefor**

(30) Priority: 11.08.1998 JP 24110498
(71) Applicant: Shin-Etsu Chemical Co., Ltd., Chiyoda-ku Tokyo 100 (JP)
(72) Inventor: Tsumura, Hiroshi, 2-13-1 Isobe, Annaka-shi, Gunma-ken (JP); Kawaguchi, Sakae c/o Naoetsu Plant, Kubiki-mura, Naka Kubiki-gun, Niigata (JP); Teshigawara, Seiichi, 2-13-1 Isobe, Annaka-shi, Gunma-ken (JP); Hirasawa, Hideo, 2-13-1 Isobe, Annaka-shi, Gunma-ken (JP)
(74) Representative: Wibbelmann, Jobst, Dr., Dipl.-Chem.

(57) **Abstract**

There is disclosed a method of treating an exhaust gas comprising absorbing and/or neutralizing, in a packed tower (5), hydrogen chloride in high temperature exhaust gas which is exhausted from an apparatus for producing synthetic quartz according to a flame hydrolysis method (1) and apparatus therefor characterized in that a temperature of the exhaust gas is lowered by bringing the gas into contact with cooling medium, especially water or a treatment solution for hydrogen chloride before the exhaust gas is passed through a packed bed in the packed tower. In a method of producing a synthetic quartz according to a flame hydrolysis method, when hydrogen chloride in the high temperature exhaust gas exhausted from the apparatus for producing the synthetic quartz is absorbed and neutralized in a packed tower, a packing material in the packed tower made of inexpensive synthetic polymer such as polypropylene or polyethylene can be used, and safe operation can be performed.

## Description

### BACKGROUND OF THE INVENTION

### Field of the Invention:

The present invention relates to a method of producing a synthetic quartz according to a flame hydrolysis method and a technique for treatment of high temperature exhaust gas containing hydrogen chloride which is exhausted from the apparatus for producing it. Particularly, the present invention relates to a method of treating an exhaust gas and an apparatus therefor using a packed tower to absorb and neutralize hydrogen chloride in the exhaust gas wherein a packing material is protected, and absorption efficiency of hydrogen chloride is improved.

### Description of the Related Art

There has been generally known a so-called flame hydrolysis method, which is a method of producing a synthetic quartz by subjecting tetrachloro silane, trichloroalkyl silane or the like to vapor phase hydrolysis in flame in which hydrogen is burned with oxygen. When the synthetic quartz is industrially produced according to the method, batch process is generally repeated, and oxyhydrogen flame is put on and put off repeatedly, in many cases. Thereby, an exhaust gas temperature is varied in the range from a room temperature to 200 °C or more, and in operation, it is high as more than 100°C, in many cases.

From the point of view of earthly environmental protection and reduction of the waste, it is necessary to prevent hydrogen chloride in the exhaust gas from being discharged into atmosphere by allowing it to be absorbed in water or neutralizing it with alkaline aqueous solution.

When the hydrogen chloride in the exhaust gas is absorbed and neutralized, a packed tower is generally used. A packing material used in a packed bed of the packed tower for improving a gas-liquid contact efficiency needs to have corrosion resistance to hydrochloric acid which is formed as a result of dissolution of hydrogen chloride in the exhaust gas into water, namely acid resistance. Generally, the packing material made of polypropylene or polyethylene can be used. However, when the exhaust gas is passed through such a packing material made of plastic material, the material is deformed, and in an extreme case, is molten to be unavailable, since the temperature of the exhaust gas is high.

The above-mentioned problem can be solved by using a packing material made of ceramics, or acid resistant precious metal such as tantalum. However, such a material is extremely expensive and significantly increases cost for construction of a plant. Accordingly, such a method is inappropriate for industrial use.

Furthermore, in the case that the exhaust gas is passed through the packed bed in order to allow hydrogen chloride in the exhaust gas to be absorbed in water, if the temperature of the exhaust gas is high, the absorption rate of hydrogen chloride in water is lowered, since solubility of hydrogen chloride in water is lower at higher temperature.

### SUMMARY OF THE INVENTION

The present invention has been accomplished to solve the above-mentioned problems, and an object of the present invention is to provide a method of treating a exhaust gas by absorbing and neutralizing hydrogen chloride in the high temperature exhaust gas exhausted from the apparatus for production in a packed tower, in a method of producing a synthetic quartz according to a flame hydrolysis method and an apparatus therefor, wherein a packing material in the packed tower is made of inexpensive synthetic polymer such as polypropylene or polyethylene, and absorption rate and absorption speed of the hydrogen chloride in water is increased.

To achieve the above mentioned object, the present invention provides a method of treating an exhaust gas comprising absorbing and/or neutralizing, in a packed tower, hydrogen chloride in high temperature exhaust gas which is exhausted from an apparatus for producing synthetic quartz according to a flame hydrolysis method wherein a temperature of the exhaust gas is lowered by bringing the gas into contact with cooling medium, before the exhaust gas is passed through a packed bed in the packed tower.

As described above, when high temperature hydrogen chloride exhausted from the apparatus for production of the synthetic quartz according to the flame hydrolysis reaction is brought into contact with cooling medium, before it is passed through a packed bed in the packed tower, to lower the temperature of the exhaust gas, the accident of deformation or melting of the packing material in the packed bed never happens, even if it is made of the above-mentioned plastics. Accordingly, safe operation is enabled.

The present invention also provides a method of treating an exhaust gas comprising absorbing and/or neutralizing, in a packed tower, hydrogen chloride in high temperature exhaust gas which is exhausted from an apparatus for producing synthetic quartz according to a flame hydrolysis method wherein a temperature of the exhaust gas is lowered by bringing the gas into contact with water or a treatment solution for hydrogen chloride, before the exhaust gas is passed through a packed bed in the packed tower.

As described above, when high temperature hydrogen chloride exhausted from the apparatus for production of the synthetic quartz according to the flame hydrolysis reaction is brought into contact with water or a treatment solution for hydrogen chloride, before it passes through a packed bed in the packed tower, to lower the temperature of the exhaust gas, the accident of deformation or melting of the packing material in the packed bed never happens, even if it is made of the above-mentioned plastics. Accordingly, sate operation is enabled. Furthermore, if water is used as the absorption solution for hydrogen chloride, an absorbing rate and an absorbing speed can be increased. As a result, a treatment efficiency of an exhaust gas can be improved.

Preferably, the temperature of the exhaust gas is lowered by sprinkling water or a treatment solution for hydrogen chloride at a lower part of the packed bed in the above-mentioned packed tower.

By the method, the high temperature exhaust gas is efficiently cooled, and the packing material made of plastics can be safely protected. Furthermore, sprinkling is generally performed not only in the lower part of the packed bed, but also in the upper part of the packed bed. Therefore, absorption can be conducted in two steps, so that absorption efficiency can be further improved.

In that case, the temperature of the exhaust gas passing through the packed bed of the packed tower is preferably 60 °C or less.

If the gas temperature is low as above, an absorbing rate or an absorbing speed can be increased particularly in the case that water is used as the absorption solution for hydrogen chloride, so that treatment efficiency of the exhaust gas can be improved. Furthermore, when the packing material in the packed bed is made of plastic, it can be more surely protected.

The present invention also provides an apparatus for treating an exhaust gas connected to an apparatus for producing synthetic quartz according to a flame hydrolysis method, which has a structure wherein the exhaust gas is brought into gas-liquid contact with a cooling medium at a lower part of a packed bed in a packed tower in which hydrogen chloride in the high temperature exhaust gas is absorbed and/or neutralized.

In the apparatus, the temperature of the exhaust gas flowing into the part right below the packed bed can be significantly lowered, and thus the packed bed hardly suffers from damages such as deformation, meltdown or the like, even if it consists of plastic packing material. Accordingly, the apparatus can be operated safely.

The present invention also provides an apparatus for treating an exhaust gas connected to an apparatus for producing synthetic quartz according to a flame hydrolysis method, which has a structure wherein the exhaust gas is brought into gas-liquid contact with water or a treatment solution for hydrogen chloride gas at a lower part of a packed bed in a packed tower in which hydrogen chloride in the high temperature exhaust gas is absorbed and/or neutralized.

In the apparatus, the temperature of the exhaust gas flowing into the part right below the packed bed can be significantly decreased, so that the packed bed hadly suffers from damages such as deformation, meltdown or the like, even if it consists of plastic packing material. Accordingly, the apparatus can be operated safely.

Furthermore, when the temperature of the exhaust gas is lowered as described above, particularly by using water as an absorption solution for hydrogen chloride, an absorption rate or an absorption speed can be increased, and a treatment efficiency for the exhaust gas can be improved in the apparatus.

As described above, according to the present invention, in a method of producing a synthetic quartz according to a flame hydrolysis method, when hydrogen chloride in the high temperature exhaust gas exhausted from the apparatus for producing the synthetic quartz is absorbed and neutralized in a packed tower, a packing material in the packed tower made of synthetic polymer such as polypropylene or polyethylene which is inexpensive and highly resistant to acids can be used, and risk of deformation, meltdown or the like of the packing material in operation can be prevented. Accordingly, the apparatus can be operated safely. Furthermore, the production cost of the apparatus for treating the exhaust gas can be reduced, and thus production cost of the synthetic quartz can also be reduced.

Furthermore, when hydrogen chloride in the exhaust gas is absorbed in water using the packed tower, an absorption rate and an absorption speed of the hydrogen chloride in water can be increased, and treatment efficiency of the exhaust gas can be improved.

### BRIEF DESCRIPTION OF THE DRAWINGS

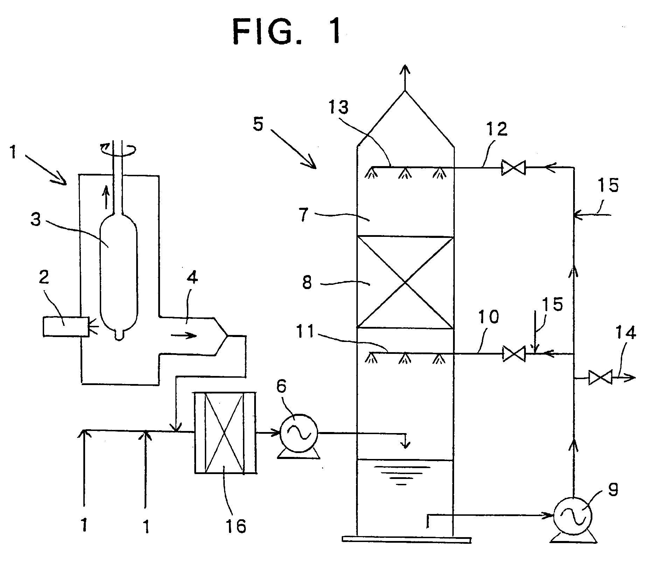

Fig.1 is a schematic view of an apparatus for treating exhaust gas of the present invention, which is connected to an apparatus for producing synthetic quartz.

### DESCRIPTION OF THE INVENTION AND A PREFERRED EMBODIMENT

The embodiment of the present invention will be described below specifically, especially as for the case that water or a treatment solution for hydrogen chloride is used as a cooling medium, referring figures, but is not limited thereto.

Fig.1 is a schematic view of an apparatus for treating exhaust gas of the present invention.

The apparatus for treating exhaust gas of the present invention which is connected to an apparatus for producing synthetic quartz according to the flame hydrolysis method comprises, for example, an exhaust fan 6 to which each exhaust pipe 4 of plural apparatuses for producing synthetic quartz 1··· is connected, a packed tower 7 for treating the exhaust gas, and a pump 9 for circulation of an absorption solution in the tower, as shown in Fig.1.

The apparatus for producing synthetic quartz 1 comprises a chamber in which a quartz material as a starting material is inserted, an exhaust pipe 4 for evacuating the chamber, a burner 2 provided so that the tip end thereof may be directed to the above-mentioned quartz material. To the burner 2 are connected a raw material line of tetrachloro silane (SiCl₄), trichloroalkyl silane or the like and a fuel gas line of H₂ gas, O₂ gas or the like.

Using the apparatus, synthetic quartz material 3 can be produced by blowing raw material and gas from the burner 2 to a target portion with rotating the quartz material, and depositing sooty reaction product (SiO₂) of oxyhydrogen flame hydrolysis on the surface of the target part.

In the flame hydrolysis reaction, the exhaust gas containing hydrogen chloride is generated from the apparatus for producing synthetic quartz 1. Generally, the gas is allowed to pass through the dust collector 16 in order to remove the dust contained in the exhaust gas, and then sent to the apparatus for absorption and/or neutralization in order to remove harmful components. As the dust collector 16, a wet dust collector or a dry dust collector such as a bag filter can be used. Generally, a packed tower (absorption tower) 7 can be used in order to conduct absorption and/or neutralization of the exhaust gas. The method for sending the exhaust gas to the packed tower 7 can be a method wherein the exhaust gas is allowed to pass through the dust collector 16 via the exhaust pipe 4 of the apparatus for producing synthetic quartz 1, and then blown into the packed tower 7 using the exhaust gas fan 6, or a method wherein the exhaust gas is drawn into the packed tower 7 with a evacuating fan provided at down stream of the packed tower 7 (not shown). Either of them can be used.

In the packed tower 7, the packed bed 8 wherein so-called packing material is piled up is provided in order to improve gas-liquid contact, and water or a solution for treatment of hydrogen chloride (hereinafter referred to as the absorption solution occasionally, including water) is sprinkled to the top of the packed bed 8 with the upper sprinkler 13. At the same time, the exhaust gas containing hydrogen chloride is introduced from the bottom of the packed bed 8, and brought into counterflow contact with the absorption solution. As a result, hydrogen chloride in the exhaust gas is absorbed in the absorption solution, which is then pooled in the bottom of the tower, and the dehydrochlorinated exhaust gas is exhausted into the open air from the top of the tower. The absorption solution pooled in the bottom of the tower is sent to the upper sprinkler 13 via an upper liquid feed pipe 12 with an absorption solution circulating pump 9, and sprinkled again. The absorption solution is circulated to absorb hydrogen chloride until the concentration of hydrogen chloride reaches certain value, and is discharged little by little from the circulatory system. A fresh absorption solution or water is supplied thereto via a absorption solution feed pipe 15 in an amount corresponding to the amount of discharge amount.

According to the present invention, the accident of deformation, meltdown or the like of the packing material 8 made of, for example, polypropylene, polyethylene or the like due to high temperature exhaust gas can be prevented by bringing the high temperature exhaust gas into gas-liquid contact with water or the treatment solution used for absorbing or neutralizing hydrogen chloride in the exhaust gas to decrease the temperature of the exhaust gas before it passes through the packed bed 8 in the packed tower 7, in addition to the constitution of the packed tower and an operating method described above.

Examples of the method for gas-liquid contact include a method of sprinkling the absorption solution to the exhaust gas through use of a spray nozzle or a dispersing plate, a method of bubbling the solution with the exhausting gas through use of a bubble cap plate. The method of sprinkling with the spray nozzle is more effective and preferable.

The gas-liquid contact can be conducted at a cooling tower additionally provided on the upstream side of the packed tower. Alternatively, the lower spray apparatus 11 can be provided right below the packed bed 8 in the packed tower 7, to which the absorption solution can be sent via a lower solution feed pipe 10 and sprayed, as in the embodiment shown in Fig.1. Thereby, only one tower can serve as both of a spray tower and a cooling tower. Furthermore, the lower spray apparatus can share pipes (the lower solution feed pipe 10 and the upper solution feed pipe 12) and the circulation pump for the absorption solution, with the upper spray apparatus 13 for sprinkling the solution to the packed bed 8 for the purpose of the absorption or neutralization treatment.

The solution for being brought into contact with the high temperature exhaust gas and cooling it can be water or the absorption solution freshly supplied from the outside of the tower via an absorption solution feed pipe 15. Alternatively, the solution used for cooling, absorbing or neutralization can be circulated using the circulation pump 9 for the absorption solution to be used.

In the case that the high temperature exhaust gas before entering to the packed bed 8 is cooled to 110 °C or lower by the gas-liquid contact, even if the inexpensive plastic packing material made of polypropylene or polyethylene is used, it is not deformed nor molten. Accordingly, safe operation, as well as continuous absorbing and neutralization treatment are enabled.

Furthermore, when the temperature of the exhaust gas is lowered to 60°C or less by the gas-liquid contact operation in the treatment wherein hydrogen chloride in the high temperature exhaust gas is absorbed in water, absorbing efficiency is improved, absorbing speed can be accelerated, and sure protection of the packing material made of plastics can be achieved.

If the exhaust gas after absorption and neutralization treatment in the packed tower 7 contains hydrogen chloride at a permissible level for emission to open air, it can be emitted to open air without any further treatment. However, if the amount of hydrogen chloride is not low enough, the gas can be treated again by being passed through the absorbing tower or the neutralization tower to decrease concentration of hydrogen chloride to the permissible level for emission to open air.

The treatment solution wherein the concentration of hydrogen chloride has reached a certain value after the treatment in the packed tower 7 can be discharged through an absorption solution discharge pipe 14 provided on the discharge side of the circulation pump 9 for the absorption solution, or discharged from the tower through use of the discharge pump for the absorption solution (not shown in the figure). When the solution is discharged from the tower, the amount of the solution in the tower is decreased. Therefore, the tower can be replenished with water or a fresh absorption solution. The replenishment can be conducted by directly supplying the solution to the tower, or by supplying it to the pipe for sprinkling via an absorption solution feed pipe 15.

### [Examples]

The following examples and comparative examples are being submitted to further explain the present invention. These examples are not intended to limit the scope of the present invention.

### (Example 1)

Hydrogen chloride in the exhaust gas discharged from the process for producing synthetic quartz was absorbed using the apparatus shown in Fig.1.

The synthetic quartz raw material 3 was produced by vapor-hydrolyzing tetrachloro silane in oxyhydrogen flame through use of the burner 2 in the apparatus for producing synthetic quartz 1. The same type of plural apparatuses for producing the synthetic quartz 1 ··· as the above-mentioned apparatus for producing the synthetic quartz 1 were operated at the same time. The amount of the exhaust gas flowing into each of the pipes 4 was 300 Nm³/min in all. The temperature of the exhaust gas was 170°C, and the amount of hydrogen chloride in the exhaust gas was 4800 ppm.

After the exhaust gas was passed through the dust catcher (bag filter) 16, sent to the packed tower (hydrogen chloride absorbing tower) 7 of the apparatus for treating the exhaust gas 5 through use of the exhaust gas fan 6. The packed tower 7 had a diameter of 2.6 m and height of 16 m, and was made of heat-resistant FRP. As the packing material, Telalet S-2 made of polypropylene (bland name, manufactured by Nittetsu Kakoki Co., Ltd.) was packed in the packed bed 8 at the middle part of the tower. In order to sprinkle the absorption solution to the packed bed 8, the upper sprinkler 13 equipped with several spray nozzles was provided at the upper part of the tower. In order to cool the packed bed 8 before passage of the exhaust gas, the lower sprinkler 11 equipped with several spray nozzles was provided below the packed bed 8. The solution was circulated in the tower through use of an absorption solution circulating pump 9, and was supplied to the upper sprinkler 13 and the lower sprinkler 11 at 40 m³/hour and 80 m³/hour respectively.

The temperature of the exhaust gas was 53°C, as measured with the thermometer provided right below the packed bed 8 in the tower. The discharge amount of the solution from the tower and the supply amount of water were controlled so that concentration of hydrochloric acid in the waste solution discharged from the packed tower 7 may be 15%, and the operation was continued for about 4000 hours. During the operation, the packed tower 7 was operated stably, but the temperature of the exhaust gas emitted from the apparatus for producing synthetic quartz was varied in the range of 75°C to 190°C, as a result of a repeated batch process. The temperature of the exhaust gas before entering to the packed bed 8 was varied in the range of 45°C to 55°C, as measured with a thermometer provided in the tower. The rate of absorption of hydrogen chloride was 85% on average.

After operation for 4000 hours, all of the solution in the tower was discharged, and the packing material was checked. The packing material had the same shape and the same condition as those before the operation, and no deformation was observed.

### (Example 2)

Hydrogen chloride in the exhaust gas discharged from the apparatus for producing synthetic quartz 1 ··· was absorbed by the same apparatus as that of Example 1 except that the amount of the exhaust gas flow in each exhaust pipe 4 was 150 Nm³/min in all. The temperature of the exhaust gas was 170°C, and the amount of hydrogen chloride in the exhaust gas was 3000 ppm.

The packed tower (hydrogen chloride absorption tower) 7 had a diameter of 1.5 m and height of 6 m. The absorption solution was supplied to the upper sprinkler 13 and the lower sprinkler 11 at 15 m³/hour and 30 m³/hour respectively.

The temperature of the exhaust gas was 67°C, as measured with the thermometer provided right below the packed bed 8 in the tower. The discharge amount of the solution from the tower and the supply amount of water were controlled so that concentration of hydrochloric acid in the waste solution discharged from the packed tower 7 may be 15%, and the operation was continued for about 4000 hours. During the operation, the packed tower 7 was operated stably, but the temperature of the exhaust gas emitted from the apparatus for producing synthetic quartz 1 ··· was varied in the range of 75°C to 190°C, as a result of a repeated batch process. The temperature of the exhaust gas before entering to the packed bed 8 was varied in the range of 60°C to 70°C, as measured with a thermometer provided in the tower. The rate of absorption of hydrogen chloride was 55% on average.

After operation for 4000 hours, all of the solution in the tower was discharged, and the packing material was checked. The packing material had the same shape and the same condition as those before the operation, and no deformation was observed.

### (Comparative Example)

The operation was conducted using the same apparatus and under the same condition as those in Example 2 except that circulation and spraying of the absorption solution from the spray nozzles of the lower spray apparatus 11 in the packed tower 7 was not conducted.

About one hour after initiation of the operation, flow of the exhaust gas was stopped. The packed tower was checked, and it was revealed that the packing material was molten to clog the packed tower.

The present invention is not limited to the above-described embodiment. The above-described embodiment is a mere example, and those having the substantially same structure as that described in the appended claims and providing the similar action and effects are included in the scope of the present invention.

For example, although the case that water or a treatment solution for hydrogen chloride is used as a cooling medium has been explained mainly, other cooling medium such as liquefied gas cooling medium can also be used. Namely, any medium which can lower the temperature of the exhaust gas can be utilized.

Furthermore, the synthetic quartz synthesized by flame hydrolysis method and treated by the present invention can be used for any purposes. For example, it can be used for an apparatus for producing optical fiber material, for manufacture of lenses, photomasks or the like.

## Claims

1. A method of treating an exhaust gas comprising absorbing and/or neutralizing, in a packed tower, hydrogen chloride in high temperature exhaust gas which is exhausted from an apparatus for producing synthetic quartz according to a flame hydrolysis method characterized in that a temperature of the exhaust gas is lowered by bringing the gas into contact with cooling medium, before the exhaust gas is passed through a packed bed in the packed tower.

2. A method of treating an exhaust gas comprising absorbing and/or neutralizing, in a packed tower, hydrogen chloride in high temperature exhaust gas which is exhausted from an apparatus for producing synthetic quartz according to a flame hydrolysis method characterized in that a temperature of the exhaust gas is lowered by bringing the gas into contact with water or a treatment solution for hydrogen chloride, before the exhaust gas is passed through a packed bed in the packed tower.

3. The method of treating an exhaust gas according to Claim 2 characterized in that the temperature of the exhaust gas is lowered by sprinkling water or a treatment solution for hydrogen chloride at a lower part of the packed bed in the packed tower.

4. The method of treating an exhaust gas according to any one of Claims 1 to 3 characterized in that the temperature of the exhaust gas passing through the packed bed of the packed tower is 60 °C or less.

5. An apparatus for treating an exhaust gas connected to an apparatus for producing synthetic quartz according to a flame hydrolysis method, which has a structure characterized in that the exhaust gas is brought into gas-liquid contact with a cooling medium at a lower part of a packed bed in a packed tower in which hydrogen chloride in the high temperature exhaust gas is absorbed and/or neutralized.

6. An apparatus for treating an exhaust gas connected to an apparatus for producing synthetic quartz according to a flame hydrolysis method, which has a structure characterized in that the exhaust gas is brought into gas-liquid contact with water or a treatment solution for hydrogen chloride gas at a lower part of a packed bed in a packed tower in which hydrogen chloride in the high temperature exhaust gas is absorbed and/or neutralized.
